# EUROPEAN PATENT SPECIFICATION

(11) **EP 1 629 929 B1**
(45) Date of publication and mention of the grant of the patent: **08.10.2008**
(21) Application number: 05254955.7
(22) Date of filing: 09.08.2005
(51) Int. Cl.: B23K 20/02, C23C 14/32, B23P 6/04, F01D 5/00

(54) **Method of repairing worn portions of a turbine component restoration using cathodic arc or Low Pressure Plasma Spraying (LPPS) and High Isostatic Pressing (HIP)**
Verfahren zur Reparatur von verschlissenen Teilen einer Turbinenkomponente unter Verwendung von kathodischem Lichtbogengerät oder Niederdruckplasma-Sprühgerät und heissisostatischem Pressen
Procédé de réparation de portions de composants de turbine utilisant le procédé à arc cathodique ou pulvérisation à plasma basse pression et le pressage isostatique à chaud

(30) Priority: 26.08.2004 US 926475
(43) Date of publication of application: 01.03.2006
(73) Proprietor: United Technologies Corporation, Hartford Connecticut 06101 (US)
(72) Inventor: Minor, Michael, Arlington, TX 76018 (US); Bischof, Chris J., Southlake, TX 76092 (US); Koven, Herbert, Southlake, TX 76092 (US)
(74) Representative: Leckey, David Herbert

(56) References cited:
- EP-A- 1 013 788
- US-A- 3 802 938
- US-A- 4 098 450
- US-A- 4 449 714
- US-A- 4 482 398
- US-A- 4 837 389
- US-A- 5 732 467
- US-A1- 2003 211 356

## Description

The invention relates to a method of dimensionally restoring turbine engine components using a cathodic arc and/or Low Pressure Plasma Spray (LPPS) coating process.

US 5,732,467 discloses a method of repairing a worn portion in a metal part according to the preamble of claim 1. US 4,837,389 discloses a method for repairing gas turbine components, US 4,482,398 discloses a method for heat treating titanium alloy castings. US 3,802,938 discloses a method of fabricating nickel base superalloys.

### Description of the Related Art

It is common for the surface of gas turbine engine components, such as blade outer seals, turbine blades, turbine vanes, combustors, fan blades, and compressor parts, to degrade over the course of their operation, for example due to the presence of particulate matter in the gas path, e.g., from the air or resulting from combustion of fuel and air. The degradation can result in wear to the leading edge surface of such components resulting in a physical loss of material sufficient, in some instances, to alter the aerodynamic characteristics of such components. Of particular concern is wear arising in turbine components comprised of superalloy materials such as nickel-based superalloys. Such materials are produced as equiaxed, directionally solidified, and single crystal alloy structures. Similar wear occurs in parts formed of titanium and titanium based alloys which are neither directionally solidified or single crystal alloy structures.

Unfortunately, presently utilized methods for dimensionally restoring turbine engine components suffer from significant drawbacks. Examples of such presently employed methods include Activated Diffusion Healing (ADH) or Turbofix (a registered trademark of UTC), diffusion brazing, welding, and the use of High velocity Oxy-Fuel (HVOF) spray materials. ADH or Turbofix diffusion brazing typically employs a mixture of braze and base alloy to restore lost metal. Properties of the as-deposited braze and base alloy typically exhibit significantly reduced properties, e.g., less than 50% of the strength of the base material on equiaxed alloys. When applied to directionally solidified and single grain alloys, the braze and base alloy restoration material can exhibit strength properties which are significantly lower than 50% of base material. Attempts to weld base material onto the surface of turbine components suffer from different drawbacks. Specifically, it is typical when applying by welding a material onto a superalloy component to induce cracking. In addition, in instances where the weld is successful, the properties exhibited by directionally solidified and single crystal alloys exhibit significantly lower strength due to the subset of materials which may be used to achieve acceptable welds. Lastly, the application of HVOF spray materials similarly suffers drawbacks. Specifically, because the process deposits material in an oxygen-containing atmosphere, the ability to bond the restoration material to the component is inhibited. As a result, internal oxidation and the oxygen content of the applied repair alloy lessens the resulting strength of the repair.

What is therefore needed is a method for dimensionally restoring engine parts, particularly gas turbine engine components, which can effect repair with an alloy exhibiting material properties comparable to that of the base material from which the part is constructed, and which is usable on an equiaxed, directionally solidified and single crystal alloys.

### SUMMARY OF THE INVENTION

Accordingly, it is an object of the present invention to provide a method for dimensionally restoring turbine engine components using a cathodic arc and/or Low Pressure Plasma Spray (LPPS) coating process.

In accordance with the present invention, a method of repairing a worn portion in a metal part comprises the steps set forth in claim 1.

In one embodiment, the metal part is a gas turbine engine component.

The details of one or more embodiments of the invention are set forth in the accompanying drawings and the description below. Other features and advantages of the invention will be apparent from the description and drawings, and from the claims.

### BRIEF DESCRIPTION OF THE DRAWINGS

FIG. 1 is a flow diagram of the method of the present invention.
FIG. 2 is an illustration showing the wear portion on a turbine component to which the method of the present invention is directed.
FIG. 3 is a cross-sectional illustration of the wear portion on a turbine component to which the method of the present invention is directed.
FIG. 4 is a cross-sectional illustration of a turbine component showing the restoration alloy of the present invention.
FIG. 5 is a cross-sectional illustration of a turbine component showing the diffusion region.

Like reference numbers and designations in the various drawings indicate like elements.

### DETAILED DESCRIPTION

It is therefore a teaching of the present invention to provide a method of dimensionally restoring metallic parts, and particularly gas turbine engine components, by applying metal alloy and metal superalloys of a material similar to or even superior to the base material to which it is applied, in terms of both high and low cycle fatigue strength and improved oxidation, using a cathodic arc and/or LPPS coating process.

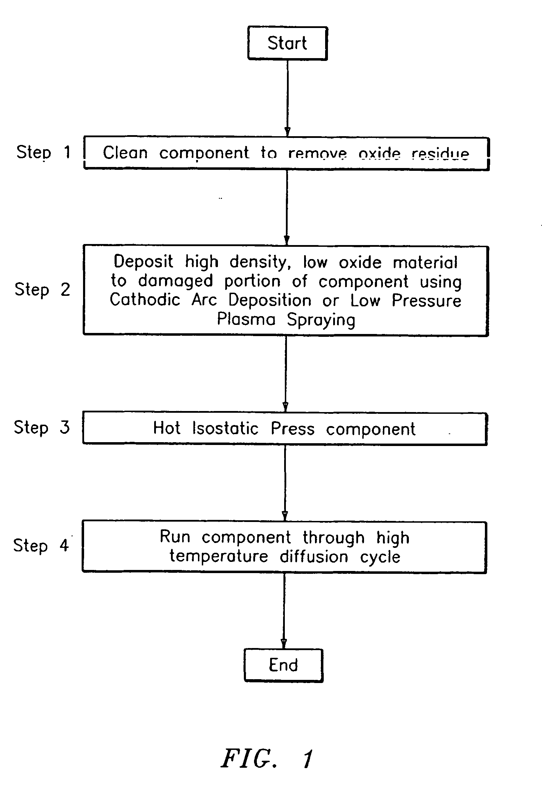

With reference to FIG. 1, there is provided a flowchart showing the steps of a method in accordance with the present invention. In step 1, the part is cleaned to remove undesirable substances such as engine run contaminants and oxide. During operation, gas turbine engine components, particularly, fan and compressor blades, experience elevated temperatures. Operating at such high temperatures in an atmosphere comprising oxygen results in the formation of an oxide layer on the surface of the part on which wear occurs. Were such an engine run oxide layer not removed prior to repair, the oxide layer would tend to act as a barrier which would prevent the bonding of restoration material to the surface of the component to be repaired. The present invention employs surrounding the surface of the component with a gas comprising hydrogen in order to remove the engine run oxide. Preferably, there is employed a fluoride cleaning process whereby a hydrogen fluoride gas is introduced into contact with the part surface. As oxide layer thicknesses vary from part to part, the parameters for removing the oxide are expressed as an amount of hydrogen fluoride gas in contact with the part for a time sufficient to reduce or eliminate the engine run oxide layer.

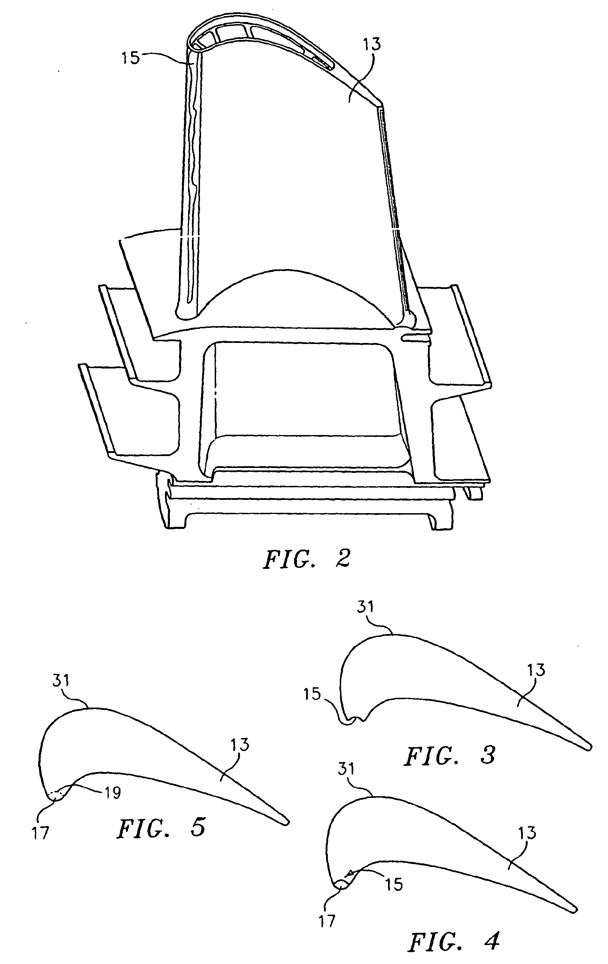

Next, in step 2, a high density, low oxide material is applied via a cathodic arc and/or LPPS coating process to the worn or damaged area of the component. With reference to FIG. 2, there is illustrated a typical example of component wear along the leading edge of an exemplary turbine engine component, specifically, a turbine fan blade. In the present example, wear portion 15 extends along the leading edge of metal part 13. For reasons which will be described more fully below, it is preferred that the cathodic arc and/or LPPS coating process used to deposit restoration alloy 17 onto the surface of metal part 13 is performed in a vacuum or near vacuum (less than 10⁻² Torr (1.3 Pa)) environment.

In a preferred embodiment, restoration alloy 17 comprises a metal having desirable strength properties or a metal which closely matches the base alloy from which part 13 is constructed. By "closely matches" it is meant that the restoration alloy is formed of a composition similar to or the same as the parent material from which part 13 is fabricated. Examples of such a metal used to form restoration alloy 17 include, but are not limited to, nickel-based alloys, nickel-based superalloys, titanium, and titanium-based alloys. Most preferred, is the use of nickel-based superalloys with parts fabricated from nickel-based superalloys. As noted above, restoration alloy 17 is preferably formed of a high density, low oxide alloy material. By this it is meant that the restoration alloy as deposited is preferably less than 1% oxide by volume (low oxide) and less than 1% porous by volume (high density).

After depositing restoration alloy 17 onto metal part 13 by a cathodic arc and/or LPPS coating process in a vacuum or near vacuum environment, the metal part 13 is subjected to a relatively high temperature, high pressure operation, preferably a hot isostatic press operation (step 3 in Fig. 1). Typically hot isostatic pressing is performed in an atmosphere of argon. In instances wherein the metal part 13 is comprised of a nickel-based alloy or nickel-based superalloy, the hot isostatic pressing is preferably performed at a pressure of between approximately 15 and 30 ksi (103-206 MPa) at a temperature of between approximately 2,000°F and 2,300°F (1093°C and 1260°C). In instances in which the metal part is constructed of titanium or a titanium-based alloy, the hot isostatic pressing preferably takes place at a pressure of between 103-206 MPa (15 and 30 ksi) at a temperature less than 1,800°F (982°C). Preferably, the hot isostatic pressing is performed for a minimum of two hours regardless of the part or restoration alloy composition.

Hot isostatic pressing serves to heat the part on which restoration alloy 17 has been deposited so as to compress hollow spaces. Such hollow spaces can arise as the result of the restoration alloy 17 being deposited in an uneven manner. If left untreated, such hollow spaces can weaken the bonding of restoration alloy 17 to the metal part 13. As noted above, restoration alloy 17 is deposited in a vacuum or near vacuum environment so that any such hollow spaces not filled by restoration alloy 17 are substantially vacuums. With reference to FIG. 3, there is illustrated a cross-sectional view of metal part 13 whereby wear portion 15 is seen as forming an indentation in the otherwise smooth outer surface 31 of metal part 13. With reference to FIG. 4, there is illustrated a cross-sectional view of metal part 13 showing the deposition of restoration alloy 17 into wear portion 15. Restoration alloy 17 is deposited via a cathodic arc and/or an LPPS process in an amount sufficient to restore the outer surface 31 of metal part 13 to a shape substantially similar to that of the outer surface 13 prior to the creation of wear portion 15. In one embodiment, restoration alloy 17 is deposited in an amount exceeding the pre-wear boundary of outer surface 31 and is machined, or otherwise finished, into a pre-wear shape.

After cathodic arc and/or LPPS coating of the wear portion 15 and application of a hot isostatic pressing operation, the part 13 is run through a high temperature diffusion cycle as shown in step 4. A diffusion cycle serves to correct changes in the physical properties of the part arising from the hot isostatic pressing followed by a relatively slow cooling process. After heating a part through a process of hot isostatic pressing, the part 13 is typically cooled slowly, e.g., at a rate of approximately 5.56°C 10°F per minute. Such a slow cooling rate typically results in gamma prime coarsening and causes the part to exhibit diminished properties, e.g., structural strength, compared to properties prior to the hot isostatic press condition. High temperature diffusion involves heating the part to between 982°C and 1260°C (1800°F and 2300°F) in a vacuum furnace (less than or equal to approximately 1 Torr (133 Pa)) and then cooling a part at a relatively rapid rate, e.g., at a rate of at least 19.4°C (35°F) per minute, preferably between 55.6°C and 83.3°C (between 100°F and 150°F) per minute. In addition to restoring the strength properties of the part 13, the high temperature diffusion cycle serves to diffuse the restoration alloy 17 with the material forming the outer surface of the metal part 13. With reference to FIG. 5, there is illustrated a diffusion region 19 formed by the application of such a high temperature diffusion cycle. It can be seen that restoration alloy 17 is situated in the space originally occupied by wear portion 15. However, the edges of restoration alloy 17, in contact with the walls of wear portion 15, have been effectively diffused so as to form diffusion region 19. Diffusion region 19 consists of material which is a mixture of restoration alloy 17 and the base alloy forming part 13.

As described above, the process of the present invention is equally applicable to components formed of equiaxed, directionally solidified, and single crystal alloys. Use of the process of the present invention does not disrupt the grain orientation of the alloy in which exhibiting wear portion 15. As a result of depositing the restoration alloy 17 and performing a hot isostatic pressing on the wear portion 15, the surface of wear portion 15 and restoration alloy 17 are bonded together leaving a directionally solidified or single crystal grain. As a result, in contrast to the presently used methods described above, the method of the present invention allows the deposition of a restoration alloy material which approaches, and in some cases surpasses, the strength of the base material from which metal part 13 is formed. In addition, deposition of restoration alloy 17 according to the process of the present invention does not induce cracking in metal part 13. Lastly, the restoration alloy 17 deposited through the process of the present invention is greater than 99% dense and has a negligible oxide content.

One or more embodiments of the present invention have been described. Nevertheless, it will be understood that various modifications may be made without departing from the scope of the invention as defined in the following claims.

## Claims

1. A method of repairing a worn (15) in a metal part (13) comprising the steps of:
providing a metal part (13) having a worn portion (15);
cleaning said worn portion (15) to remove an oxide layer;
depositing a restoration alloy (17) to cover said worn portion (15) via a deposition process selected from the group consisting of cathodic arc deposition and Low Pressure Plasma Spray (LPPS) deposition; and subjecting said part (13) to Hot Isostatic Pressing;
**characterised by** the step of performing a diffusion heat treatment upon said part (13) at a temperature of between approximately 982°C and 1260°C (1800°F and 2300°F) in a vacuum less than or equal to approximately 1 Torr (133 Pa).

2. The method of claim 1 wherein said subjecting step comprises:
performing Hot Isostatic Pressing at a pressure between 103-206 MPa (15-30 ksi) at a temperature between 1093°C-1260°C (2,000°F-2,300°F) for at least two hours when said restoration alloy (17) comprises a metal selected from the group consisting of nickel-based alloys and nickel-based superalloys.

3. The method of claim 1 wherein said performing Hot Isostatic Pressing comprises:
performing Hot Isostatic Pressing at a pressure between 103-206 MPa (15-30 ksi) at a temperature 982°C (1,800°F) for at least two hours when said restoration alloy (17) comprises a metal selected from the group consisting of titanium and titanium-based alloys.

4. The method of any preceding claim wherein said providing step comprises providing said metal part (13) selected from the group consisting of blade outer air seals, turbine blades, turbine vanes, combustors, fan blades, compressor parts, compressor blades, and compressor vanes.

5. The method of any preceding claim wherein said providing step comprises providing said metal part (13) comprising a metal selected from the group consisting of nickel-based alloys, nickel-based superalloys, and titanium-based alloys.

6. The method of any preceding claim wherein said cleaning step comprises introducing a hydrogen fluoride gas into contact with at least said worn portion (15).

7. The method of any preceding claim wherein said depositing step comprises the steps of:
creating a vacuum around at least said worn portion (15); and
depositing said restoration alloy (17) selected from the group consisting of nickel-based alloys, nickel-based superalloys, and titanium-based alloys.

8. The method of any preceding claim wherein said depositing step comprises depositing a restoration alloy (17) chat contains less than 1% oxide by volume and less than 1% porosity by volume.

9. The method of any preceding claim wherein said metal part (13) is a gas turbine engine component.

## Patentansprüche

1. Verfahren zum Reparieren eines verschlissenen Bereichs (15) in einem Metallteil (13), folgende Schritte aufweisend:
Bereitstellen eines Metallteils (13) mit einem verschlissenen Bereich (15);
Reinigen des verschlissenen Bereichs (15), um eine Oxidschicht zu entfernen;
Abscheiden einer Restaurierungslegierung (17) zum Bedecken des verschlissenen Bereichs (15) mittels eines Abscheidungsprozesses, der ausgewählt wird aus der Gruppe, die aus Bogenentladungs-Kathodenzerstäubungsabscheidung und Niederdruck-Plasmaspritz (LPPS)-Abscheidung besteht; und
Unterziehen des Teils (13) einem heißisostatischen Pressen;
**gekennzeichnet durch** den Schritt des Durchführens einer Difksionswärmebehandlung an dem Teil (13) bei einer Temperatur von zwischen näherungsweise 982°C und 1260°C (1800°F und 2300°F) in einem Vakuum von weniger als oder gleich näherungsweise 1 Torr (133 Pa).

2. Verfahren nach Anspruch 1, bei dem der Schritt des Unterziehens aufweist:
Durchführen eines heißisostatischen Pressens bei einem Druck zwischen 103 bis 206 MPa (15 bis 30 ksi) bei einer Temperatur zwischen 1093°C bis 1260°C (2000°F bis 2300°F) für mindestens 2 h, wenn die Restaurierungslegierung (17) ein Metall aufweist, das ausgewählt wird aus der Gruppe, die aus Legierungen auf Nickelbasis und Superlegierungen auf Nickelbasis besteht.

3. Verfahren nach Anspruch 1, bei dem das Durchführen des heißisostatischen Pressens aufweist:
Durchführen des heißisostatischen Pressens bei einem Druck zwischen 103 bis 206 MPa (15 bis 30 ksi) bei einer Temperatur < 982°C (1800°F) für mindestens 2 h, wenn die Restaurierungslegierung (17) ein Metall aufweist, das ausgewählt wird aus der Gruppe, die aus Titan und Legierungen auf Titanbasis besteht.

4. Verfahren nach irgendeinem vorangehenden Anspruch, bei dem der Schritt des Bereitstellens ein Bereitstellen des Metallteils (13) aufweist, das ausgewählt wird aus der Gruppe, die aus äußeren Turbinen-Luftdichtungen, Turbinen-Laufschaufeln, Turbinen-Leitschaufeln, Verbrennern, Lüfterschaufeln, Kompressorteilen, Kompressor-Laufschaufeln und Kompressor-Leitschaufeln besteht.

5. Verfahren nach irgendeinem vorangehenden Anspruch, bei dem der Schritt des Bereitstellens ein Bereitstellen des Metallteils (13) aufweist, das ein Metall aufweist, das ausgewählt wird aus der Gruppe, die aus Legierungen auf Nickelbasis, Superlegierungen auf Nickelbasis und Legierungen auf Titanbasis besteht.

6. Verfahren nach irgendeinem vorangehenden Anspruch, bei dem der Schritt des Reinigens ein Zuführen eines Fluorwasserstoffgases in Kontakt mit mindestens dem verschlissenen Bereich (15) aufweist.

7. Verfahren nach irgendeinem vorangehenden Anspruch, bei dem der Schritt des Abscheidens folgende Schritte aufweist:
Erzeugen eines Vakuums um mindestens den verschlissenen Bereich (15) herum; und
Abscheiden der Restaurierungslegierung (17), die ausgewählt wird aus der Gruppe, die aus Legierungen auf Nickelbasis, Superlegierungen auf Nickelbasis und Legierungen auf Titanbasis besteht.

8. Verfahren nach irgendeinem vorangehenden Anspruch, bei dem der Schritt des Abscheidens ein Abscheiden einer Restaurierungslegierung (17) aufweist, die weniger als 1 Vol.-% Oxid und weniger als 1 Vol.% Porosität enthält.

9. Verfahren nach irgendeinem vorangehenden Anspruch, bei dem das Metallteil (13) eine Gasturbinenmaschinenkomponente ist.

## Revendications

1. Procédé de réparation d'une partie usée (15) d'une pièce métallique (13), comportant les étapes consistant à :
mettre en place une pièce métallique (13) présentant une partie usée (15) ;
nettoyer ladite partie usée (15) pour enlever une couche d'oxyde ;
déposer un alliage (17) de rechargement pour recouvrir ladite partie usée (15) par un procédé de dépôt choisi dans le groupe formé du dépôt par arc cathodique et du dépôt par pulvérisation à plasma basse pression (LPPS) ; et
soumettre ladite pièce (13) à un pressage isostatique à chaud ;
**caractérisé par** l'étape consistant à effectuer un traitement thermique par diffusion sur ladite pièce (13) à une température comprise entre environ 982°C et 1260°C (1800°F et 2300°F) sous un vide inférieur ou égal à environ 1 Torr (133 Pa).

2. Procédé selon la revendication 1, ladite étape de pressage comportant l'étape consistant à :
effectuer un pressage isostatique à chaud à une pression comprise entre 103 et 206 MPa (15-30 ksi) à une température comprise entre 1093°C et 1260°C (2000°F et 2300°F) pendant au moins deux heures lorsque ledit alliage (17) de rechargement comporte un métal choisi dans le groupe formé des alliages à base de nickel et
des superalliages à base de nickel.

3. Procédé selon la revendication 1, ladite étape de pressage isostatique à chaud comportant l'étape consistant à :
effectuer un pressage isostatique à chaud à une pression comprise entre 103 et 206 MPa (15-30 ksi) à une température inférieure à 982°C (1800°F) pendant au moins deux heures lorsque ledit alliage (17) de rechargement comporte un métal choisi dans le groupe formé du titane et des alliages à base de titane.

4. Procédé selon l'une quelconque des revendications précédentes, ladite étape de mise en place comportant l'étape consistant à mettre en place ladite pièce métallique (13) choisie dans le groupe formé des joints à air en bout d'aubes, des aubes de turbine, des ailettes directrices de turbine, des chambres de combustion, des aubes de soufflante, des pièces de compresseur, des aubes de compresseur et des ailettes directrices de compresseur.

5. Procédé selon l'une quelconque des revendications précédentes, ladite étape de mise en place comportant l'étape consistant à mettre en place ladite pièce métallique (13) comportant un métal choisi dans le groupe formé des alliages à base de nickel, des superalliages à base de nickel et des alliages à base de titane.

6. Procédé selon l'une quelconque des revendications précédentes, ladite étape de nettoyage comportant l'étape consistant à amener du fluorure d'hydrogène gazeux au contact au moins de ladite partie usée (15).

7. Procédé selon l'une quelconque des revendications précédentes, ladite étape de dépôt comportant les étapes consistant à :
créer un vide autour d'au moins ladite partie usée (15) ;
et
déposer ledit alliage (17) de rechargement choisi dans le groupe formé des alliages à base de nickel, des superalliages à base de nickel et des alliages à base de titane.

8. Procédé selon l'une quelconque des revendications précédentes, ladite étape de dépôt comportant l'étape consistant à déposer un alliage (17) de rechargement contenant moins de 1% d'oxyde en volume et moins de 1 % de porosité en volume.

9. Procédé selon l'une quelconque des revendications précédentes, ladite pièce métallique (13) étant un composant de moteur à turbine à gaz.
